# EUROPEAN PATENT APPLICATION

(11) **EP 4 220 365 A1**
(43) Date of publication of application: **02.08.2023**
(21) Application number: 21884937.0
(22) Date of filing: 13.10.2021
(51) Int. Cl.: G06F 3/0481

(54) **FILE DRAGGING METHOD, AND ELECTRONIC DEVICE**

(30) Priority: 31.10.2020 CN 202011198501
(71) Applicant: Huawei Technologies Co., Ltd., Shenzhen, Guangdong 518129 (CN)
(72) Inventor: WANG, Meng, Shenzhen, Guangdong 518129 (CN); ZHAO, Shaohua, Shenzhen, Guangdong 518129 (CN)
(74) Representative: Isarpatent
(86) International application number: PCT/CN2021/123511
(87) International publication number: WO 2022/089208

(57) **Abstract**

A file dragging method and an electronic device are provided. In the method, a file dragging process is fed back in real time in a multi-window mode, including feeding back a dragging state of a file, a quantity of dragged files, prompt information indicating whether a target window supports addition of a dragged file, and the like, so that interaction with a user is added in the file dragging process. In this way, the user can predict a dragging action, to avoid a misoperation of the user and improve user experience.

## Description

### CROSS-REFERENCE TO RELATED APPLICATIONS

This application claims priority to Chinese Patent Application No. 202011198501.7, filed with the China National Intellectual Property Administration on October 31, 2020 and entitled "FILE DRAGGING METHOD AND ELECTRONIC DEVICE", which is incorporated herein by reference in its entirety.

### TECHNICAL FIELD

This application relates to the field of terminal technologies, and in particular, to a file dragging method and an electronic device.

### BACKGROUND

To improve visual experience, screens of various electronic devices are increasingly large, so that a requirement of a user for simultaneously running a plurality of tasks on an electronic device can be better met.

When the plurality of tasks are displayed in a plurality of windows on a display, the user may drag a file in one window to another window to share the file. However, currently, in a process of dragging a file, whether the file is successfully dragged can be known only after the user completes a dragging action. In addition, when a file fails to be dragged, the user does not know a failure cause, and the user may perform operations repeatedly, causing poor user experience.

### SUMMARY

This application provides a file dragging method and an electronic device, to improve user experience in a file dragging process.

According to a first aspect, this application provides a file dragging method. The method includes: displaying a first window and a second window in response to a first operation of a user; displaying a first interface in the first window in response to a second operation of selecting, by the user, an icon of a target file in the first window, where the first interface includes the icon of the target file; and when it is detected that the icon of the target file is dragged from the first window to the second window, displaying first identification information or second identification information in the second window in response to a third operation of the user, where the third operation is used to drag the icon of the target file from the first window to the second window, the first identification information identifies that the icon of the target file can be added to the second window, and the second identification information identifies that the icon of the target file cannot be added to the second window.

According to the foregoing technical solution, when a file is dragged to a target window, identification information may identify whether the target window can receive the dragged file, so that the user can directly view whether the file is successfully dragged. Especially when the target window cannot receive the dragged file, repeated operations of the user can be avoided, and user experience can be improved.

In a possible design, the method further includes: when it is detected that the icon of the target file is dragged from the first window to the second window, displaying third identification information in the second window, where the third identification information identifies a quantity of icons of the target file.

In the foregoing technical solution, when the file is dragged to the target window, a quantity of dragged files may be displayed. In this way, the user can directly view the quantity of dragged files, so that when an actual quantity of successfully dragged files is less than an actual quantity of dragged files, the user can know a reason for a missed quantity, thereby improving user experience.

In this embodiment of this application, there may be one or more target files. In a possible design, the target file includes a first file. It may be understood that there is one target file.

In a possible design, when there are a plurality of target files, for example, the target files include a first file and a second file, a file type of the first file is a first type, and a file type of the second file is a second type.

The method further includes: when it is detected that the icon of the target file is dragged from the first window to the second window, displaying fourth identification information in the second window, where the fourth identification information identifies that an icon of the second file of the second type cannot be added to the second window.

According to the foregoing technical solution, when a plurality of files are dragged, if the target window can receive only a file of a specific file type, a file that cannot be received by the target window may exist in the dragged files. In this case, prompt information may be displayed to prompt the user that the target window cannot receive a file of another type.

In a possible design, the method further includes: displaying first prompt information, where the first prompt information is used to prompt the user that the icon of the target file is in a dragging state.

According to the foregoing technical solution, after the user selects the target file, the target file may be displayed in the dragging state. In this way, a case in which the user loosens a hand by mistake in an operation process can be avoided, thereby improving user experience.

In a possible design, the method further includes: if it is detected that a height of the icon of the target file is greater than a first set height, adjusting the height of the icon of the target file to a second set height, and displaying the icon of the target file in the second window, where the second set height is N times the first set height, and N satisfies 0<N<1.

According to the foregoing technical solution, when the height of the target file is greater than the set height, the height of the target file may be scaled. In this way, it is convenient for the user to check whether a file is missing, and a case in which a file is dragged in disorder when there are many windows is avoided.

According to a second aspect, this application provides an electronic device. The electronic device includes a display, one or more processors, a memory, a plurality of applications, and one or more computer programs

The one or more computer programs are stored in the memory, the one or more computer programs include instructions, and when the instructions are invoked and executed by the one or more processors, the electronic device is enabled to perform the technical solution according to any one of the first aspect or the possible designs of the first aspect.

According to a third aspect, this application further provides an electronic device. The electronic device includes modules/units for performing the method according to any one of the first aspect or the possible designs of the first aspect. The modules/units may be implemented by hardware, or may be implemented by hardware executing corresponding software.

According to a fourth aspect, an embodiment of this application further provides a chip. The chip is coupled to a memory in an electronic device, and performs the technical solution according to any one of the first aspect of embodiments of this application or the possible designs of the first aspect. In embodiments of this application, "coupling" means that two components are directly or indirectly connected to each other.

According to a fifth aspect, an embodiment of this application provides a computer-readable storage medium. The computer-readable storage medium includes a computer program. When the computer program is run on an electronic device, the electronic device is enabled to perform the technical solution according to any one of the first aspect of embodiments of this application or the possible designs of the first aspect.

According to a sixth aspect, an embodiment of this application provides a computer program product. When the computer program product runs on an electronic device, the electronic device is enabled to perform the technical solution according to any one of the first aspect of embodiments of this application or the possible designs of the first aspect.

According to a seventh aspect, a graphical user interface on an electronic device is further provided. The electronic device includes a display, one or more memories, and one or more processors. The one or more processors are configured to execute one or more computer programs stored in the one or more memories. The graphical user interface includes a graphical user interface displayed when the electronic device performs the method according to the first aspect.

For the foregoing aspects of the second aspect to the seventh aspect and technical effects that can be achieved in the foregoing aspects, refer to descriptions of the technical effects that can be achieved in the foregoing possible solutions of the first aspect. Details are not described herein again.

### BRIEF DESCRIPTION OF DRAWINGS

FIG. 1 is a schematic diagram of a structure of an electronic device according to an embodiment of this application;
FIG. 2A is a block diagram of a software structure of an electronic device according to an embodiment of this application;
FIG. 2B is a block diagram of another software structure according to an embodiment of this application;
FIG. 2C is a processing flowchart according to an embodiment of this application;
FIG. 3 is a flowchart of a file dragging method according to an embodiment of this application;
FIG. 4A-1, FIG. 4A-2, and FIG. 4A-3 to FIG. 4C are schematic diagrams of user interfaces according to an embodiment of this application;

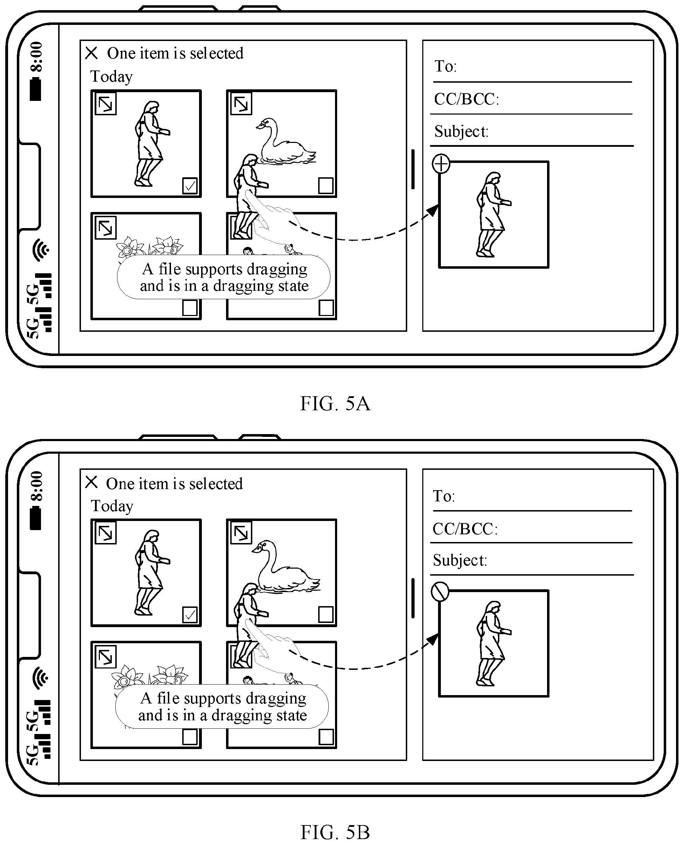

FIG. 5A and FIG. 5B are schematic diagrams of user interfaces according to an embodiment of this application;

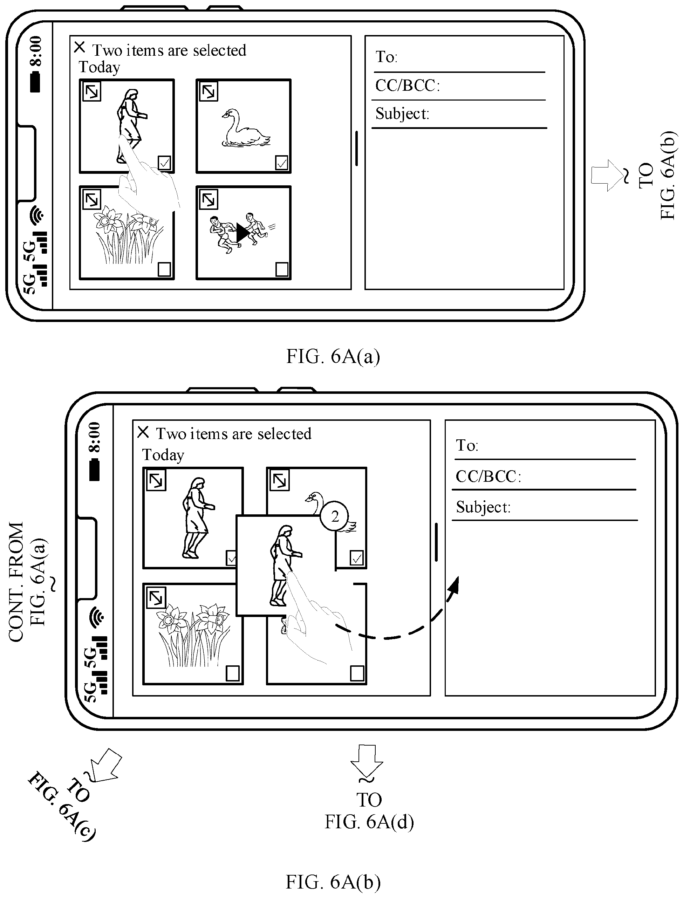

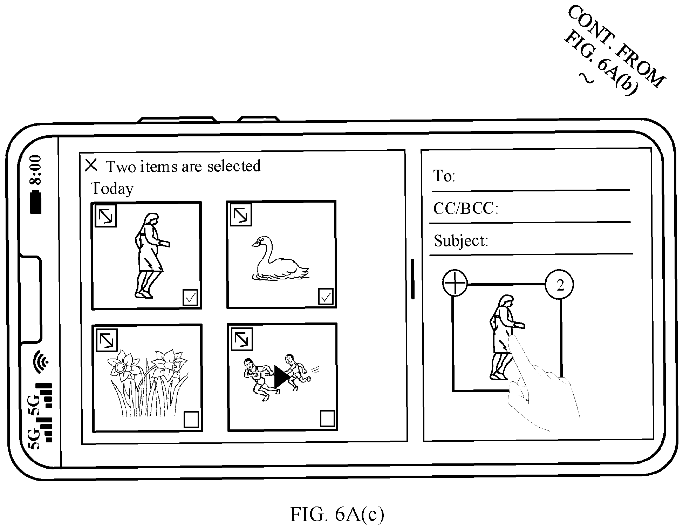

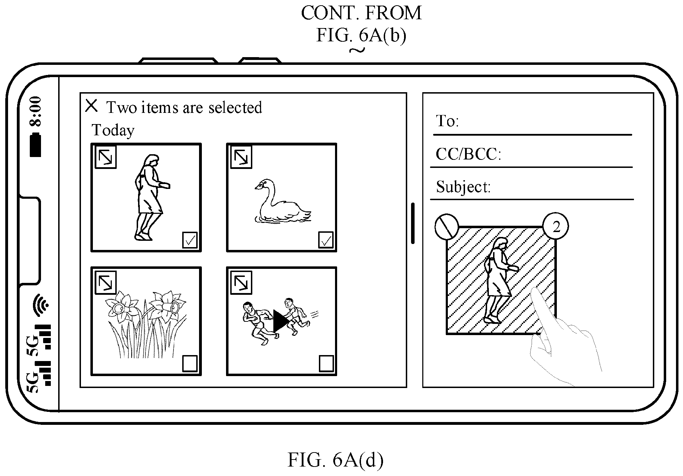

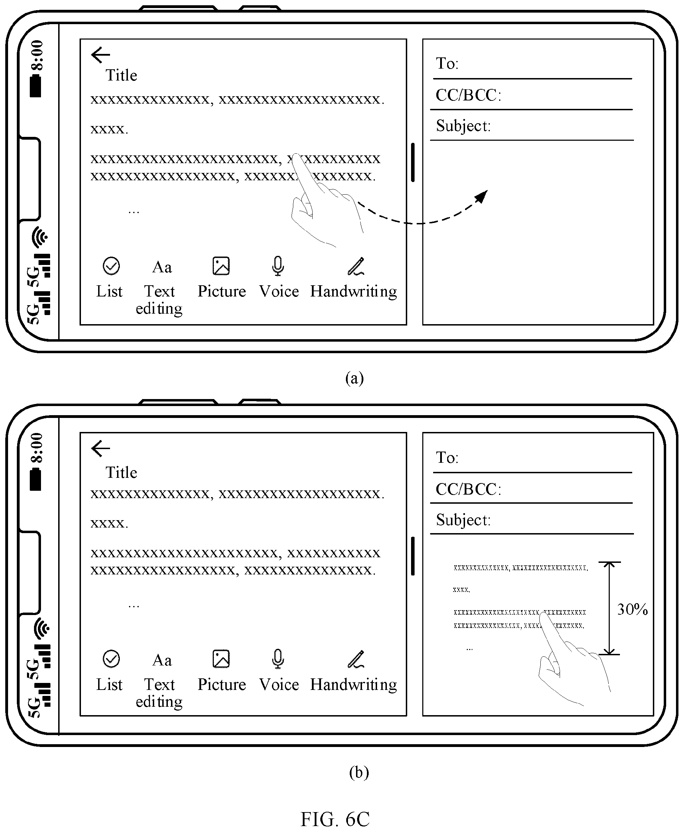

FIG. 6A(a), FIG. 6A(b), FIG. 6A(c), and FIG. 6A(d) to FIG. 6C are schematic diagrams of user interfaces according to an embodiment of this application;

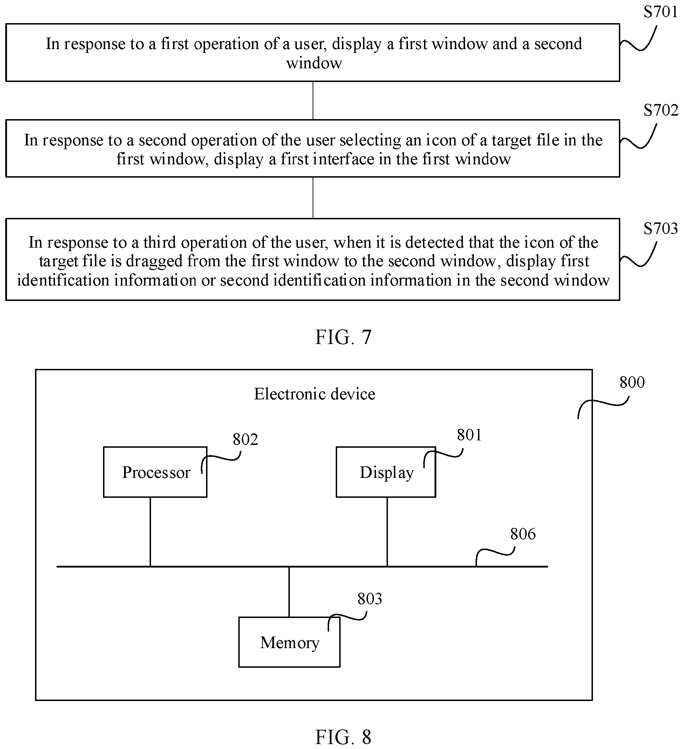

FIG. 7 is a flowchart of another file dragging method according to an embodiment of this application; and
FIG. 8 is a schematic diagram of a structure of another electronic device according to an embodiment of this application.

### DESCRIPTION OF EMBODIMENTS

The technical solutions in embodiments of this application are described in detail below with reference to the accompanying drawings of the following embodiments of this application.

In the following, some terms used in embodiments of this application are first described, to help a person skilled in the art have a better understanding.

An application (application, app) program in embodiments of this application may be referred to as an application for short, and is a software program that can implement one or more specific functions. Usually, a plurality of applications may be installed in an electronic device, for example, a camera application, an SMS message application, a mailbox application, WeChat (WeChat), WhatsApp Messenger, Line (Line), Instagram (Instagram), Kakao Talk, and DingTalk. The application in the following embodiments may be an application installed before delivery of the electronic device, or may be an application downloaded from a network or obtained from another electronic device by a user in a process of using the electronic device.

It should be noted that the file dragging method provided in embodiments of this application is applicable to an electronic device having a display, such as a mobile phone, a tablet computer, a wearable device (for example, a watch, a wristband, or a smart helmet), a vehicle-mounted device, a smart home device, an augmented reality (augmented reality, AR) device/a virtual reality (virtual reality, VR) device, a notebook computer, an ultra-mobile personal computer (ultra-mobile personal computer, UMPC), a netbook, or a personal digital assistant (personal digital assistant, PDA). This is not limited in embodiments of this application. The electronic device in embodiments of this application may alternatively be a foldable electronic device, for example, a foldable mobile phone or a foldable tablet computer. This is not limited in this application.

The following describes a structure of a mobile phone by using the mobile phone as an example.

The following describes a structure of the electronic device by using an example in which the electronic device is the mobile phone.

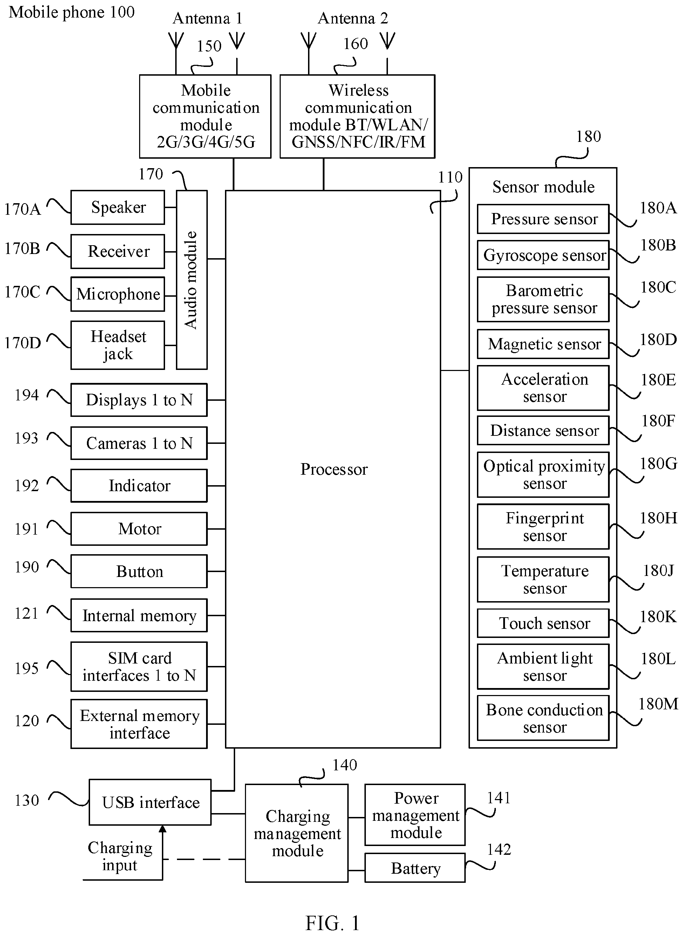

As shown in FIG. 1, the mobile phone 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent components, or may be integrated into one or more processors. The controller may be a nerve center and a command center of the mobile phone 100. The controller may generate an operation control signal based on an instruction operation code and a time sequence signal, to complete control of instruction reading and instruction execution. A memory may be further disposed in the processor 110, and is configured to store instructions and data. In some embodiments, the memory in the processor 110 is a cache memory. The memory may store instructions or data that has been used or cyclically used by the processor 110. If the processor 110 needs to use the instructions or the data again, the processor may directly invoke the instructions or the data from the memory. This avoids repeated access, reduces waiting time of the processor 110, and improves system efficiency.

The USB interface 130 is an interface that conforms to a USB standard specification, and may specifically be a mini USB interface, a micro USB interface, a USB type-C interface, or the like. The USB interface 130 may be configured to connect to a charger to charge the mobile phone 100, and may be further configured to perform data transmission between the mobile phone 100 and a peripheral device. The charging management module 140 is configured to receive charging input from the charger. The power management module 141 is configured to connect to the battery 142, the charging management module 140, and the processor 110. The power management module 141 receives input of the battery 142 and/or the charging management module 140, to supply power to the processor 110, the internal memory 121, an external memory, the display 194, the camera 193, the wireless communication module 160, and the like.

A wireless communication function of the mobile phone 100 may be implemented through the antenna 1, the antenna 2, the mobile communication module 150, the wireless communication module 160, the modem processor, the baseband processor, and the like. The antenna 1 and the antenna 2 are configured to transmit and receive an electromagnetic wave signal. Each antenna in the mobile phone 100 may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a solution, applied to the mobile phone 100, to wireless communication including 2G, 3G, 4G, 5G, and the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules in the mobile communication module 150 may be disposed in the processor 110. In some embodiments, at least some functional modules of the mobile communication module 150 may be disposed in a same device as at least some modules of the processor 110.

The wireless communication module 160 may provide a solution, applied to the mobile phone 100, to wireless communication including a wireless local area network (wireless local area network, WLAN) (such as a wireless fidelity (wireless fidelity, Wi-Fi) network), Bluetooth (Bluetooth, BT), a global navigation satellite system (global navigation satellite system, GNSS), frequency modulation (frequency modulation, FM), near field communication (near field communication, NFC), an infrared (infrared, IR) technology, or the like. The wireless communication module 160 may be one or more components integrating at least one communication processor module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, in the mobile phone 100, the antenna 1 and the mobile communication module 150 are coupled, and the antenna 2 and the wireless communication module 160 are coupled, so that the mobile phone 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time division code division multiple access (time division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation systems, SBAS).

The display 194 is configured to display a display interface of an application, and the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some embodiments, the mobile phone 100 may include one or N displays 194, where N is a positive integer greater than 1. In this embodiment of this application, the display 194 may be configured to simultaneously display a plurality of application interfaces.

The camera 193 is configured to capture a static image or a video. The camera 193 may include a front-facing camera and a rear-facing camera.

The internal memory 121 may be configured to store computer-executable program code. The executable program code includes instructions. The processor 110 runs the instructions stored in the internal memory 121, to perform various function applications of the mobile phone 100 and data processing. The internal memory 121 may include a program storage area and a data storage area. The program storage area may store an operating system, software code of at least one application (for example, iQIYI or WeChat), and the like. The data storage area may store data (for example, an image and a video) and the like generated in a process of using the mobile phone 100. In addition, the internal memory 121 may include a high-speed random access memory, or may include a non-volatile memory such as at least one disk storage device, a flash memory, or a universal flash storage (universal flash storage, UFS).

The external memory interface 120 may be configured to connect to an external storage card, for example, a Micro SD card, to extend a storage capability of the mobile phone 100. The external memory card communicates with the processor 110 through the external memory interface 120, to implement a data storage function. For example, files such as images or videos are stored in the external storage card.

The mobile phone 100 may implement an audio function such as music playing or recording through the audio module 170, the speaker 170A, the receiver 170B, the microphone 170C, the headset jack 170D, the application processor, and the like.

The pressure sensor 180A is configured to sense a pressure signal, and can convert the pressure signal into an electrical signal. In some embodiments, the pressure sensor 180A may be disposed on the display 194. The gyroscope sensor 180B may be configured to determine a motion posture of the mobile phone 100. In some embodiments, an angular velocity of the mobile phone 100 around three axes (namely, axes x, y, and z) may be determined through the gyroscope sensor 180B.

The gyroscope sensor 180B may be configured to implement image stabilization during photographing. The barometric pressure sensor 180C is configured to measure barometric pressure. In some embodiments, the mobile phone 100 calculates an altitude based on a barometric pressure value measured by the barometric pressure sensor 180C, to assist in positioning and navigation. The magnetic sensor 180D includes a Hall sensor. The mobile phone 100 may detect opening and closing of a flip cover through the magnetic sensor 180D. In some embodiments, when the mobile phone 100 is a flip phone, the mobile phone 100 may detect opening and closing of a flip cover based on the magnetic sensor 180D. Further, a feature such as automatic unlocking of the flip cover is set based on a detected opening or closing state of the leather case or a detected opening or closing state of the flip cover. The acceleration sensor 180E may detect a value of acceleration of the mobile phone 100 in various directions (usually on three axes). When the mobile phone 100 is static, a value and a direction of gravity may be detected. The acceleration sensor 180E may be further configured to identify a posture of the electronic device, and is used in an application such as switching between a landscape mode and a portrait mode or a pedometer.

The distance sensor 180F is configured to measure a distance. The mobile phone 100 may measure a distance in an infrared or a laser manner. In some embodiments, in a photographing scenario, the mobile phone 100 may measure a distance through the distance sensor 180F, to implement quick focusing. The optical proximity sensor 180G may include, for example, a light-emitting diode (LED) and an optical detector, for example, a photodiode. The light-emitting diode may be an infrared light-emitting diode. The mobile phone 100 emits infrared light through the light-emitting diode. The mobile phone 100 detects infrared reflected light from a nearby object by using the photodiode. When sufficient reflected light is detected, the mobile phone 100 may determine that there is an object near the mobile phone 100. When insufficient reflected light is detected, the mobile phone 100 may determine that there is no object near the mobile phone 100. The mobile phone 100 may detect, by using the optical proximity sensor 180G, that the user holds the mobile phone 100 close to an ear to make a call, to automatically perform screen-off for power saving. The optical proximity sensor 180G may also be used in a smart cover mode or a pocket mode to automatically perform screen unlocking or locking.

The ambient light sensor 180L is configured to sense ambient light brightness. The mobile phone 100 may adaptively adjust brightness of the display 194 based on the sensed ambient light brightness. The ambient light sensor 180L may also be configured to automatically adjust white balance during photographing. The ambient light sensor 180L may further cooperate with the optical proximity sensor 180G to detect whether the mobile phone 100 is in a pocket, to avoid an accidental touch. The fingerprint sensor 180H is configured to collect a fingerprint. The mobile phone 100 may use a feature of the collected fingerprint to implement fingerprint-based unlocking, application lock access, fingerprint-based photographing, fingerprint-based call answering, and the like.

The temperature sensor 180J is configured to detect a temperature. In some embodiments, the mobile phone 100 executes a temperature processing policy by using the temperature detected by the temperature sensor 180J. For example, when the temperature reported by the temperature sensor 180J exceeds a threshold, the mobile phone 100 lowers performance of a processor near the temperature sensor 180J, to reduce power consumption for thermal protection. In some other embodiments, when the temperature is less than another threshold, the mobile phone 100 heats the battery 142 to prevent the mobile phone 100 from being shut down abnormally because of a low temperature. In some other embodiments, when the temperature is less than still another threshold, the mobile phone 100 boosts an output voltage of the battery 142 to avoid abnormal shutdown caused by a low temperature.

The touch sensor 180K is also referred to as a "touch panel". The touch sensor 180K may be disposed on the display 194, and the touch sensor 180K and the display 194 constitute a touchscreen, which is also referred to as a "touch screen". The touch sensor 180K is configured to detect a touch operation performed on or near the touch sensor. The touch sensor may transfer the detected touch operation to the application processor to determine a type of the touch event. A visual output related to the touch operation may be provided through the display 194. In some other embodiments, the touch sensor 180K may alternatively be disposed on a surface of the mobile phone 100, and is at a position different from that of the display 194.

The bone conduction sensor 180M may obtain a vibration signal. In some embodiments, the bone conduction sensor 180M may obtain a vibration signal of a vibration bone of a human vocal-cord part. The bone conduction sensor 180M may also be in contact with a body pulse to receive a blood pressure beating signal.

The button 190 includes a power button, a volume button, and the like. The button 190 may be a mechanical button, or may be a touch button. The mobile phone 100 may receive a key input, and generate a key signal input related to a user setting and function control of the mobile phone 100. The motor 191 may generate a vibration prompt. The motor 191 may be configured to provide an incoming call vibration prompt and a touch vibration feedback. For example, touch operations performed on different applications (for example, photographing and audio playing) may correspond to different vibration feedback effects. The indicator 192 may be an indicator light, and may be configured to indicate a charging status and a power change, or may be configured to indicate a message, a missed call, a notification, and the like. The SIM card interface 195 is configured to connect to a SIM card. The SIM card may be inserted into the SIM card interface 195 or detached from the SIM card interface 195, to implement contact with or separation from the mobile phone 100.

It may be understood that the components shown in FIG. 1 do not constitute a specific limitation on a mobile phone. The mobile phone may further include more or fewer components than those shown in the figure, or some components may be combined, or some components may be split, or different component arrangements may be used.

A software system of the mobile phone 100 may use a layered architecture, an event-driven architecture, a microkernel architecture, a microservice architecture, or a cloud architecture. In this embodiment of this application, an Android system of a layered architecture is used as an example to describe the software structure of the mobile phone 100.

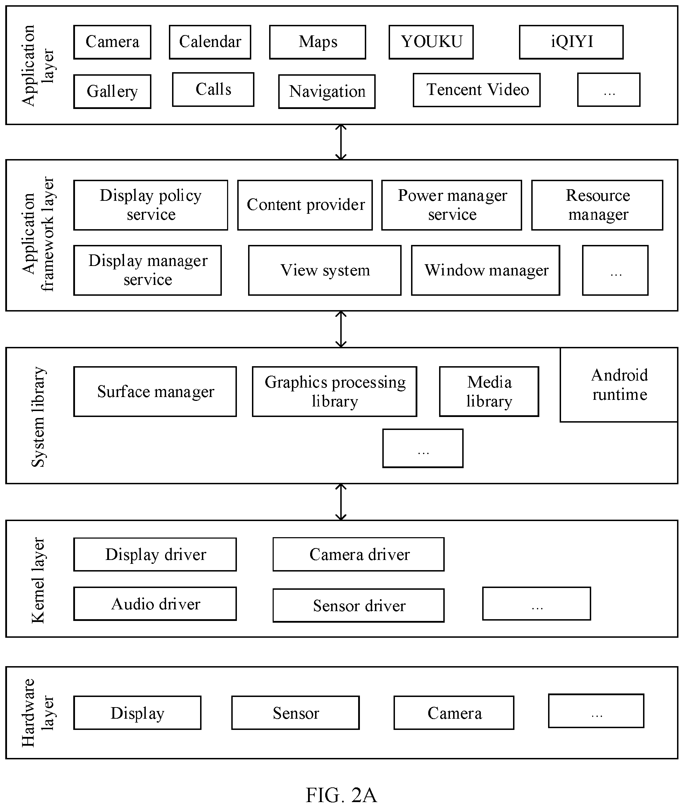

FIG. 2A is a block diagram of a software structure of a mobile phone 100 according to an embodiment of this application. In a layered architecture, software is divided into several layers, and each layer has a clear role and task. The layers communicate with each other through a software interface. In some embodiments, the Android system is divided into four layers: an application layer, an application framework layer, an Android runtime (Android runtime) and system library, and a kernel layer from top to bottom.

The application layer may include a series of application packages. As shown in FIG. 2A, applications such as a browser, YOUKU, Tencent Video, Maps, and iQIYI may be installed in the application layer.

The application framework layer provides an application programming interface (application programming interface, API) and a programming framework for an application at the application layer. The application framework layer includes some predefined functions.

As shown in FIG. 2A, the application framework layer may include a display policy service, a power manager service (power manager service, PMS), and a display manager service (display manager service, DMS). Certainly, the application framework layer may further include an activity manager, a window manager, a content provider, a view system, a resource manager, a notification manager, and the like.

The window manager provides a window manager service (window manager service) for a window, to control and manage an interface displayed on a display.

The content provider is configured to: store and obtain data, and enable the data to be accessed by an application. The data may include a video, an image, an audio, calls that are made and answered, a browsing history and bookmarks, an address book, and the like.

The view system includes visual controls such as a control for displaying a text and a control for displaying an image. The view system may be used to construct an interface of an application.

The resource manager provides various resources such as a localized character string, an icon, an image, a layout file, and a video file for an application.

The notification manager enables an application to display notification information in a status bar, and may be configured to convey a notification message. The notification manager may automatically disappear after a short pause without requiring user interaction. For example, the notification manager is configured to notify download completion, give a message notification, and the like. The notification manager may alternatively be a notification that appears in a top status bar of the system in a form of a graph or a scroll bar text, for example, a notification of an application that is run on a background, or may be a notification that appears on a screen in a form of a dialog window. For example, text information is displayed in the status bar, an announcement is given, an electronic device vibrates, or an indicator light blinks.

The Android runtime includes a kernel library and a virtual machine. The Android runtime is a runtime environment in the Android operating system and is responsible for scheduling and managing the Android operating system.

The kernel library includes two parts: One part is a performance function that needs to be invoked by Java language, and the other part is a kernel library of the Android operating system.

The application layer and the application framework layer run on the virtual machine. The virtual machine executes java files of the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media library (Media Library), a three-dimensional graphics processing library (for example, OpenGL ES), and a 2D graphics engine (for example, SGL).

The surface manager is configured to: manage a display subsystem and provide fusion of 2D and 3D layers for a plurality of applications.

The media library supports playback and recording of audios and videos in a plurality of formats, and opening of static images in a plurality of formats. The media library may support a plurality of audio and video coding formats, for example, MPEG4, H.264, MP3, AAC, AMR, JPG, and PNG.

The graphics processing library is configured to implement three-dimensional graphics drawing, image rendering, compositing, layer processing, and the like. The 2D graphics engine is a drawing engine for 2D drawing.

The kernel layer is a layer between hardware and software of the electronic device. The kernel layer includes at least a display driver, a sensor driver, a camera driver, an audio driver, and the like, and is configured to drive hardware at the hardware layer.

The hardware layer may include various sensors (such as a touch sensor), a display, a camera, and the like.

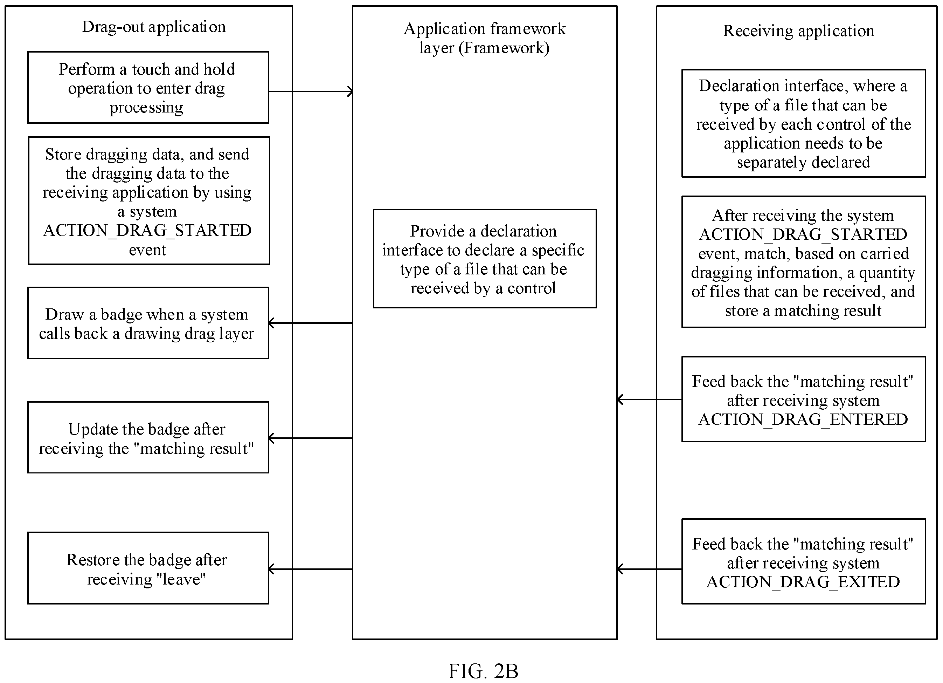

In this embodiment of this application, the application layer may include at least one application. Two applications are used as an example. One application is a sending application (also referred to as a drag-out application, that is, an application in which an element is located when the element is dragged out), and the other application is a receiving application (that is, an application receiving the dragged element). Refer to FIG. 2B. The electronic device may detect a touch and hold operation of a user to enter a drag processing event, store dragging data selected by the user (for example, store the dragging data to ClipDescription), and then send the dragging data to a receiving application by using a system (application framework layer (Framework)) ACTION_DRAG_STARTED event. In addition, a sending application may draw a badge when a system calls back a drawing layer. The badge herein includes an icon indicating a quantity of elements and an icon indicating whether an element can be added to a receiving window.

Correspondingly, the receiving application may declare an interface, and declare a type of a file that can be received by each control (also referred to as a window) of the application. After receiving the ACTION_DRAG_STARTED event, the receiving application may match, based on dragging information carried in the ACTION_DRAG_STARTED event, a quantity of files that can be received by the receiving application, and store a matching result.

When the user drags an element to a releasable area (which is an interface of the receiving application) of the receiving application, a receiving control receives an ACTION_DRAG _ENTERED notification. Then, the receiving application returns the matching result to the system, and the system sends the matching result to the sending application. Correspondingly, the sending application may update the badge after receiving the matching result. It may be understood that the badge herein may be understood as an icon indicating whether a file can be added to a receiving window and a quantity of dragged files in the following embodiments.

When a dragging action leaves the releasable area, the receiving control of the receiving application receives an ACTION_DRAG_EXITED notification and feeds back a "leave" notification to the system (that is, the dragging action leaves the receiving application). Then, the receiving application feeds back the "leave" notification to the system, and the system sends the "leave" notification to the sending app. Correspondingly, the sending application restores the badge after receiving the "leave" notification.

It may be understood that the element is a file in the following embodiments. In this application, the two terms are sometimes used interchangeably. It should be understood that meanings of the two terms are consistent.

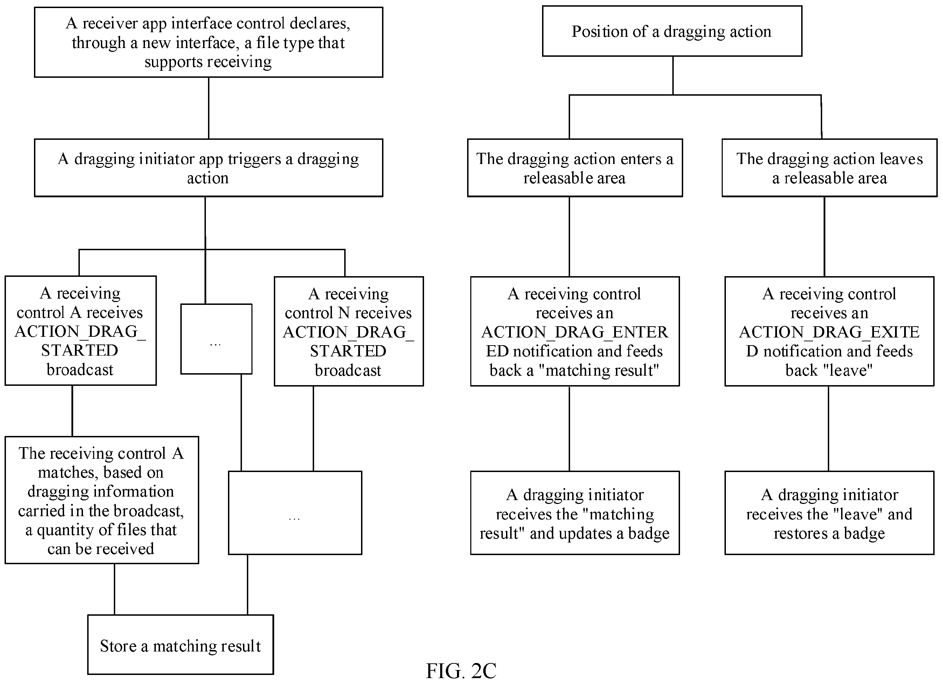

FIG. 2C is a processing flowchart according to an embodiment of this application. For specific step implementation of the flowchart, refer to the descriptions of the embodiment shown in FIG. 2B. Details are not described herein again.

It should be noted that, when the user triggers the dragging action, the receiving control for ACTION_DRAG_STARTED broadcast is registered, and a quantity of files that can be received by the receiving control may be matched based on ClipDescription information (that is, dragging information) carried in the broadcast.

The following embodiments are described by using an example in which embodiments are applied to the architecture of the mobile phone 100 shown in FIG. 1.

In addition, in the following embodiments, "at least one" means one or more, and "a plurality of" means two or more. In addition, it should be understood that in descriptions of this application, terms such as "first" and "second" are merely used for distinguishing and description, but should not be understood as indicating or implying relative importance, or should not be understood as indicating or implying a sequence.

Currently, to meet a requirement of a user for simultaneously processing a plurality of tasks, the electronic device supports a multi-window mode, that is, the plurality of tasks may be simultaneously displayed on one display, to prevent the user from frequently switching windows. In this scenario, the user may drag a file from one window to another to share resources. In a file dragging process, there is no prompt information on a display. Therefore, the user can know whether the file is successfully dragged only after file dragging is completed. If the file fails to be dragged, the user cannot determine whether the failure is caused by an operation error or another reason, resulting in poor user experience.

In view of this, embodiments of this application provide a file dragging method, and a dragging state in real time is fed back in a file dragging process, for example, a dragging state, a quantity of dragged files, and whether a file supports dragging are displayed, to improve user experience.

The following specifically describes, with reference to the accompanying drawings, the file dragging method provided in embodiments of this application.

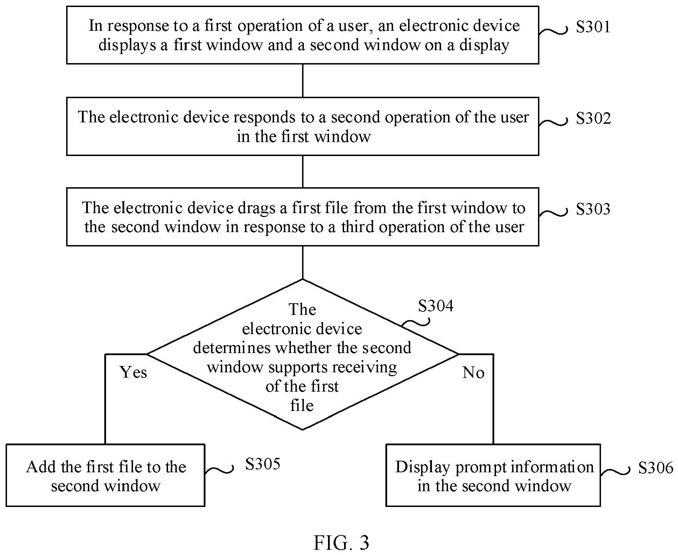

FIG. 3 is a flowchart of a file dragging method according to an embodiment of this application. As shown in FIG. 3, the method may include the following steps.

S301: An electronic device displays a first window and a second window on a display in response to a first operation of a user.

Herein, the first operation of the user may be an operation of the user starting a multi-task window. For example, the first operation may be an operation of triggering split-screen displaying. For example, the display displays a first application interface. On the first application interface, the electronic device may respond to the first operation of the user, for example, slide inward along a left edge of the display, to invoke an application bar of a smart split-screen, and then tap an application icon requiring screen splitting in a split-screen application bar to implement screen splitting. Certainly, it may be understood that the operation of triggering split-screen displaying may be another gesture operation. For example, screen splitting may be enabled by pulling down a shortcut switch in a notification bar, or screen splitting may be enabled in a voice control manner. This is not limited in this application.

It should be noted that sizes of two windows in a split-screen displaying mode may be the same or may be different, and the windows in the split-screen displaying mode may be displayed on the display in a form of a floating window. In this embodiment of this application, the first window and the second window may alternatively be freely displayed on the display of the electronic device. This is not limited in this application.

Refer to FIG. 4A-1, FIG. 4A-2, and FIG. 4A-3. It is assumed that an application interface 400 of a gallery is displayed on a display of an electronic device. In this case, a user may slide inward along a right edge of the interface 400 to invoke an application bar for screen splitting. For example, a user interface 410 may be displayed on the display. The interface 410 includes an application bar 411 for screen splitting, and then an application icon "email" 412 is tapped in the application bar 411. In this case, a user interface 420 may be displayed on the display. In this way, two application windows may be displayed on the display, for example, an application window 421 including the gallery and an application window 422 including the email.

For ease of description, the windows displayed on the display may be denoted as the "first window" and the "second window" below.

In this embodiment of this application, the display of the electronic device may display a plurality of windows, and the plurality of windows may be a plurality of windows of one application, or may be a plurality of windows of a plurality of applications. This is not limited in this application. For example, the display displays the first window and the second window. The first window may be a display window of a first application, and the second window may be a display window of a second application. In another example, the first window may be a first display window of a first application, and the second window may be a second display window of the first application. In other words, in this application, a file may be dragged between application windows of two applications, or a file may be dragged between two application windows of one application.

It should be noted that the file may include a picture, a video, a text, an audio, and the like. In addition, when selecting a file, the user may select one or more files.

S302: The electronic device responds to a second operation of the user in the first window.

The second operation herein may be an operation of selecting a file by the user. For example, the second operation may be an operation of the user touching and holding a picture or a video in the gallery. For example, after touching and holding a picture for preset duration (for example, 2s), the user may select the picture.

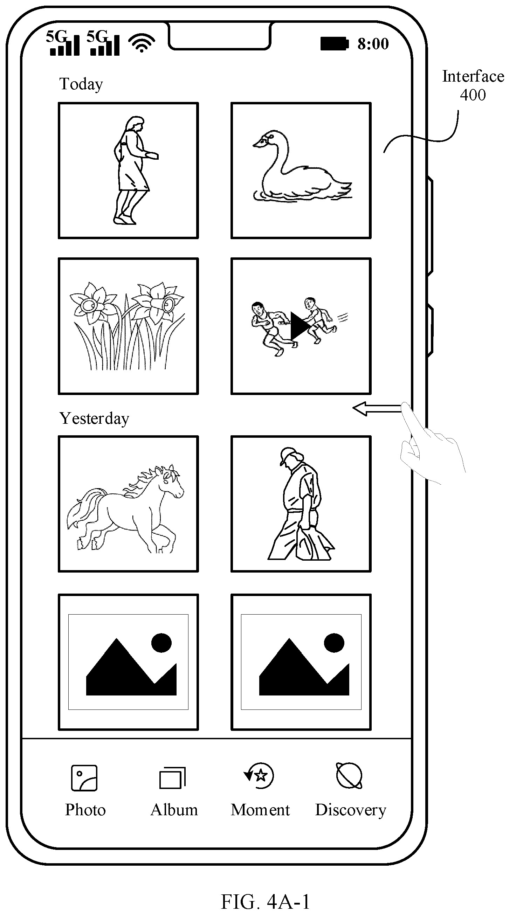

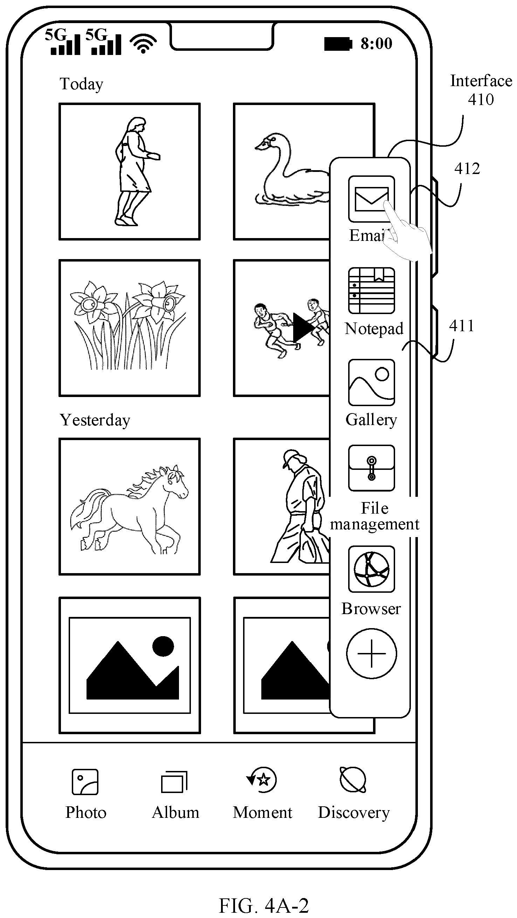

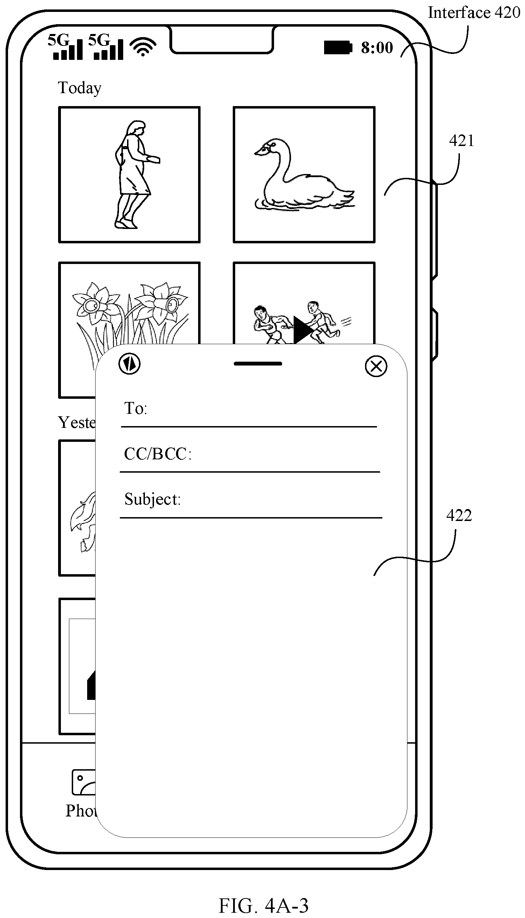

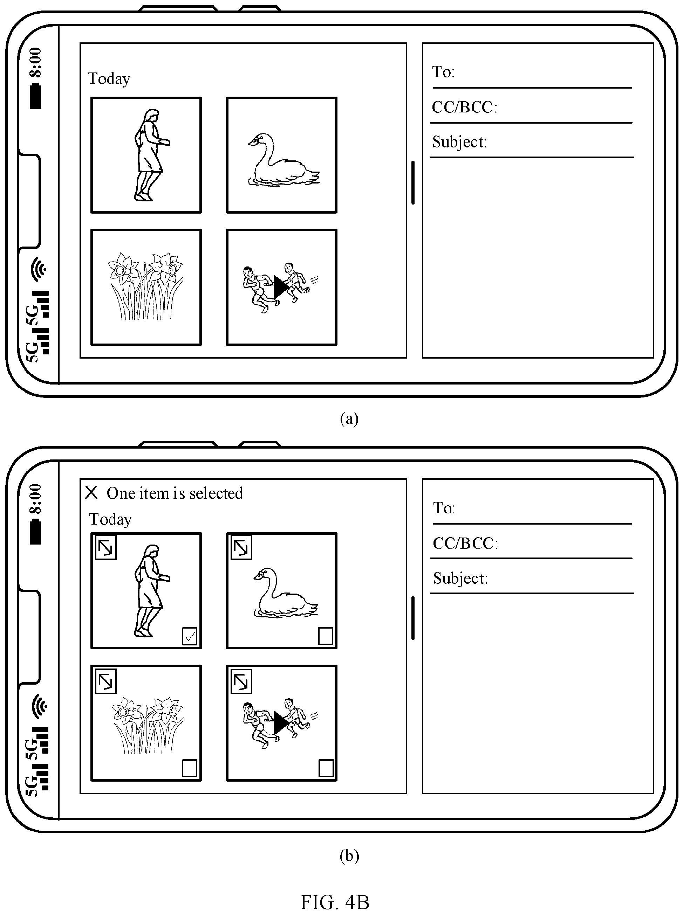

Refer to FIG. 4B. It is assumed that the first window is an interface of the application gallery, and the second window is an interface of the application email. Assuming that the user needs to drag a picture in the first window to the second window, for example, the user selects two pictures from the gallery in the schematic diagram shown in (a) in FIG. 4B, the user may touch and hold the selected pictures, and then the gallery may display an interface shown in (b) in FIG. 4B. To be specific, after the user touches and holds a picture, the picture may be in a selection state, for example, a tick may be displayed in a lower right corner of the picture.

It should be understood that the application window in this application may be placed left or right, or may be placed up or down. This is not limited in this application. In the following embodiment, an example in which a mobile phone is in a landscape mode and an application is placed left or right is used for description.

It should be noted that, when the picture is in the selection state, the selected picture and an unselected picture may look different in a visual view of the user. For example, an upper layer of the selected picture may display a layer of blur. Certainly, during actual product implementation, the layer of blur may not be displayed. This is not limited in this application.

It may be understood that, during actual application, an execution sequence of step S301 and step S302 is not limited. Alternatively, the user may first select a file to be dragged, and then start a multi-task window. This is not limited in this application.

S303: The electronic device drags a first file from the first window to the second window in response to a third operation of the user.

The third operation herein may be a dragging operation performed by the user on the first file, for example, may be a dragging operation performed by the user on a picture, may be a dragging operation performed by the user on a video, or may be a dragging operation performed by the user on a picture and a video. This is not limited in this application. Certainly, the dragging operation may be a dragging operation performed by the user on one picture, or may be a dragging operation performed by the user on a plurality of pictures. After selecting the first file in the first window, the user may drag the file selected in the first window to the second window.

In some embodiments, the electronic device may pre-store a file that can be dragged in each window. For example, it is assumed that the first window includes a plurality of files. For example, files 1, 2, and 4 respectively corresponding to identification information 1, 2, and 4 are files that can be dragged, and files 3, 5, and 6 respectively corresponding to identification information 3, 5, and 6 are files that cannot be dragged. Certainly, whether dragging is supported may alternatively be distinguished based on a file type. For example, when the file type is a picture, dragging is supported; when the file type is a video, dragging is not supported. Alternatively, whether dragging is supported may be distinguished based on a file format. For example, when the file format is an XML format, dragging is supported; when the file format is a JSON format, dragging is not supported. Alternatively, whether dragging is supported may alternatively be distinguished based on a file name extension, and so on. This is not limited in this application.

Because the user may loosen a hand by mistake (which may be understood as releasing a dragging state) during an operation, to avoid such a problem in a file dragging process, in this embodiment of this application, if the file supports dragging, prompt information may be displayed. The prompt information may indicate that the file supports dragging and is in the dragging state.

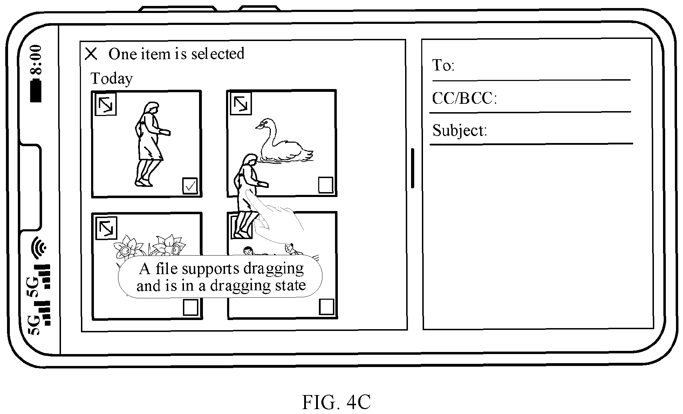

For example, with reference to FIG. 4C, the user may touch and hold (for example, 2s) in the schematic diagram shown in (b) in FIG. 4B and drag a selected file, and then the file may enter a dragging state. For example, the user may drag the selected file to another position on the interface, for example, as shown in the figure. In this case, prompt information shown in FIG. 4C may be displayed on the display of the electronic device, for example, "a file supports dragging and is in a dragging state" may be displayed.

In another example, if the selected file does not support dragging (for example, the file does not support dragging because the file is excessively large), prompt information may also be displayed, for example, "a file does not support dragging" may be displayed, or "a file is excessively large and does not support dragging" may be displayed, to avoid a problem that the user performs dragging for a plurality of times, does not obtain a response, and does not know a cause of a dragging failure, thereby improving user experience.

It should be noted that the foregoing prompt information may be displayed in the first window, that is, a window in which the dragged file is located, to prompt the user that the file is in the dragging state.

S304: The electronic device determines whether the second window supports receiving of the first file.

For each window, a file in the window may be dragged to another window, and correspondingly, a file dragged by the user from the another window may also be received. In some other embodiments, the electronic device may pre-store a file that can be received by each window. For example, it is assumed that the second window is a receiving window, and the second window supports receiving of files 1, 2, and 3 respectively corresponding to identification information 1, 2, and 3, and does not support receiving of files 4, 5, and 6 respectively corresponding to identification information 4, 5, and 6; the second window supports receiving of a file of a picture type, and does not support receiving of a file of a video type; the second window may support receiving of a file in a first format (for example, XML), and does not support receiving of a file in a second format (for example, JSON); whether the window supports receiving may be determined based on a file name extension; or whether the window supports receiving may be determined based on a file size. This is not limited in this application.

In a possible implementation, in this embodiment of this application, a data declaration interface may be provided for each window. The data declaration interface may be used to declare a file that can be received by the window. Specifically, the data declaration interface may be used to declare a type of a file that can be received by each window. For example, with reference to Table 1, each declaration interface may correspond to one data declaration.

**Table 1 Correspondence between an interface and a data declaration**

| Declaration interface | Data declaration |
|---|---|
| Interface 1 | Declaring that a window 1 can receive only a file of a text type |
| Interface 2 | Declaring that a window 2 can receive a file and a picture of a text type |
| Interface 3 | Declaring that a window 3 can receive files of various types |

It may be understood that Table 1 is merely an example for description, and different declaration interfaces may correspond to different data declarations. Certainly, different declaration interfaces may alternatively correspond to a same data declaration. This is not limited in this application.

In this embodiment of this application, the receiving window may determine, based on a data declaration of the receiving window, whether the dragged file can be received. For example, if a file type of the dragged file belongs to a data declaration range of the receiving window, the receiving window may receive the dragged file; if a file type of the dragged file does not belong to a data declaration range of the receiving window, the receiving window cannot receive the dragged file.

S305: If the second window supports receiving of the first file, add the first file to the second window.

S306: If the second window does not support receiving of the first file, display prompt information in the second window.

In some embodiments, when the second window does not support receiving of the first file, the prompt information may be displayed in the second window. The prompt information is used to prompt the user that the second window does not support receiving of the first file, so that the user learns of the dragging state in a timely manner, to avoid a problem such as a case in which a failure cause is unclear and a plurality of attempts are made when dragging fails, thereby improving user experience.

The following uses dragging of a file in the gallery as an example to describe in detail a schematic diagram of a user interface in this step with reference to different scenarios.

Scenario 1: When a single picture is dragged, identification information may be added to the picture to identify whether the picture can be added to the second window.

For example, whether a picture can be added may be distinguished by using an identifier shown in the figure. For example, when a picture can be added to the second window, an upper left corner of the picture may be identified with "+" ; when a picture cannot be added to the second window, an upper left corner of the picture may be identified with "\".

In another example, whether a picture can be added may be identified by using a color (or transparency) of the picture. For example, when a picture can be added to the second window, a color of the picture may remain unchanged, that is, the picture keeps the original color; when a picture cannot be added to the second window, a color of the picture may be gray, or a floating layer may be displayed at an upper layer of the original picture.

The floating layer refers to another interface located on a current display interface. The floating layer may be translucent, and the floating layer may make the current display interface visible to the user blurred. For example, a floating layer may be displayed on an upper layer of a picture dragged by the user, so that the picture visible to the user is blurred.

Certainly, it may be understood that, whether a picture can be added to the receiving window may alternatively be identified by using both an identifier in an upper left corner of the picture and a color of the picture. For example, when an identifier "+" is displayed in an upper left corner of a picture and a color of the picture does not change, it indicates that the picture can be added to the receiving window; when an identifier "\" is displayed in an upper left corner of a picture and there is a translucent floating layer on the picture, it indicates that the picture cannot be added to the receiving window.

For example, it is assumed that a picture selected by the user in the first window is a picture that supports dragging. When the user drags the picture from the first window to the second window, if the second window supports adding of the picture, a thumbnail of the picture dragged by the user may be displayed in the second window, and identification information that supports adding may be displayed in the thumbnail. Refer to FIG. 5A. It is assumed that the user drags a picture from the first window to the second window along an arrow direction shown in the figure. In this case, the second window may display an interface shown in FIG. 5A. The dragged picture may be displayed on the interface, and "+" may be displayed on an upper left corner, to prompt the user that the second window can receive the picture.

It may be understood that a data declaration of the receiving window may be actively declared or may not be declared. When an area of the identification information "+" is identified in green, it indicates that the receiving window actively declares the data declaration of the window. When an area of the identification information "+" is identified in yellow, it indicates that the receiving window does not actively declare the data declaration of the window. Certainly, the foregoing is merely an example. During actual product implementation, another color may alternatively be used for identification.

Refer to FIG. 5B. It is assumed that the second window does not support adding of a picture dragged by the user. When the user drags the picture from the first window to the second window along an arrow direction shown in the figure, the second window may display an interface shown in FIG. 5B. The dragged picture may be displayed on the interface, and "\" may be displayed on an upper left corner, to prompt the user that the second window cannot receive the picture.

It may be understood that, the foregoing schematic diagram is merely an example. During actual product implementation, if the second window does not support receiving of a picture dragged by the user, when the picture is dragged to the second window, an upper layer of the picture displayed in the second window may be gray, and a circular area of the identification information "\" is also gray. In this display manner, the user can directly view that the dragged picture cannot be added to the receiving window, thereby improving user experience.

Scenario 2: When a plurality of pictures are dragged, a quantity of dragged pictures is displayed.

In this embodiment of this application, when the plurality of pictures are dragged, identification information may be added to an upper right corner of the pictures. The identification information identifies the quantity of pictures selected by the user. Certainly, if one picture is dragged, identification information may also be added to an upper right corner of the picture, for example, a number " 1" is displayed. This is not limited in this application.

It should be noted that in this embodiment of this application, the identification information (for example, a number) for determining the quantity of dragged files is a system-level capability of the electronic device, but not an application-level capability.

It may be understood that adding the identification information to the upper left corner of the picture to identify whether the picture can be added to the receiving window and adding the identification information to the upper right corner of the picture to identify the quantity of pictures are merely examples for description. For example, the number may be added to the upper left corner of the picture to identify the quantity of pictures selected by the user, or the number may be added to the lower left corner or the lower right corner of the picture to identify the quantity of pictures selected by the user. This is not limited in this application.

In some other embodiments, the identification information may alternatively be at a position that is at a specific distance from the upper left corner/lower left corner/lower right corner/upper right corner of the picture. This is not limited in this application.

Refer to FIG. 6A(a), FIG. 6A(b), FIG. 6A(c), and FIG. 6A(d). It is assumed that the user selects a plurality of pictures in a window in which the gallery is located, for example, as shown in FIG. 6A(a), selects two pictures. Then, the user touches and holds any one of the plurality of pictures, so that the picture is in a dragging state, for example, the picture may be dragged to a position shown in FIG. 6A(b). Then, the user may drag the plurality of pictures along an arrow direction shown in the figure to a window in which the email is located. In this case, if the window in which the email is located supports receiving of the plurality of pictures, a schematic diagram shown in FIG. 6A(c) may be displayed. To be specific, if the receiving window supports adding of the dragged pictures, identification information that supports adding of the files and identification information for a quantity of files may be displayed in the receiving window, for example, "+" and "2" may be displayed. "+" indicates that the window in which the email is located supports adding of the dragged pictures, and "2" indicates that two pictures are dragged.

If the window in which the email is located does not support receiving of the quantity of pictures, a schematic diagram shown in FIG. 6A(d) may be displayed. To be specific, if the receiving window does not support adding of the dragged pictures, identification information that does not support adding of the files and identification information for a quantity of files may be displayed in the receiving window, for example, "\" and "2" may be displayed. "\" indicates that the window in which the email is located does not support adding of the dragged pictures, and "2" indicates that two pictures are dragged.

It may be understood that, in the schematic diagram shown in FIG. 6A(d), slashes in an upper layer of the picture are merely an example. In an actual product, the picture may be translucent. This is not limited in this application.

Scenario 3: When a plurality of files of a plurality of file types are dragged, prompt information is displayed for a file that cannot be dragged.

For example, it is assumed that a plurality of files selected by the user include different file types (for example, a dragged file includes two types: a picture and a video). If the receiving window supports only adding of the picture, after the picture and the video are dragged to the second window, prompt information may be displayed in the second window, for example, prompt information "adding of a video is not supported" may be displayed.

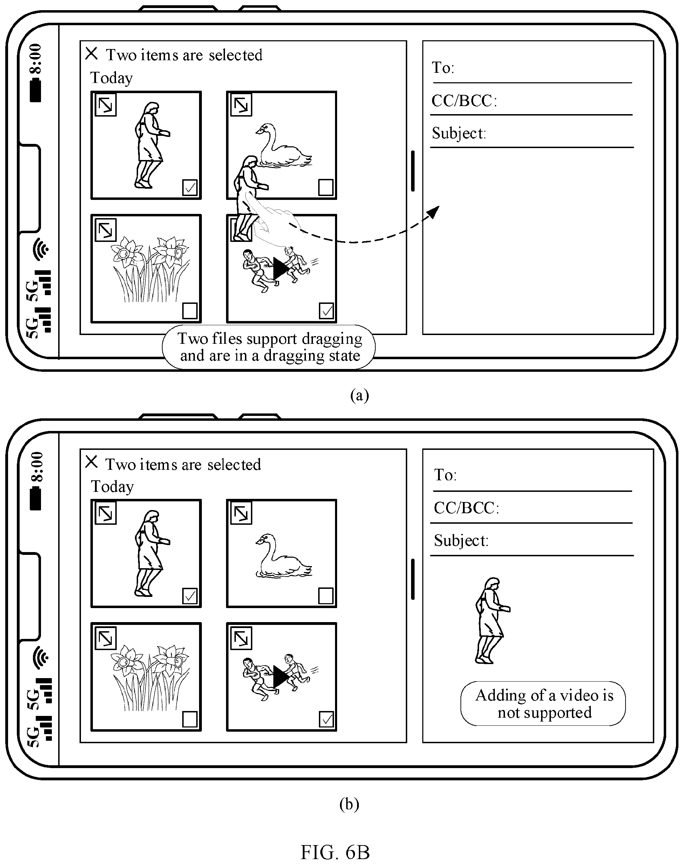

For example, with reference to FIG. 6B, it is assumed that the user selects a picture and a video in the gallery, for example, as shown in (a) in FIG. 6B. After the user drags the selected picture and video along an arrow direction shown in the figure to a window in which the email is located, the user may loosen a hand, that is, after a dragging state is released, if the window in which the email is located does not support adding of a video, the picture selected by the user may be loaded and displayed in the window in which the email is located, and prompt information " adding of a video is not supported" is displayed, for example, with reference to (b) in FIG. 6B.

Scenario 4: When text content is dragged, a height of the displayed text content may be scaled based on the height of the text content.

In a possible implementation, when the text content is dragged, if the height of the text content is greater than a set height (for example, denoted as a first set height), the text content may be scaled during dragging, for example, scaled to a second set height. A relationship between the first set height and the second set height may be as follows: The second set height is N times the first set height, where 0<N<1 . For example, when the height of the text content is less than or equal to the first set height (for example, 30% of a screen height), the text content may not be scaled; when the height of the text content is greater than the first set height (for example, 30% of a screen height), the text content may be scaled to 30% of the screen height for display. In this way, information missing when the text content is excessively high can be avoided, and the user can conveniently make a check.

For example, with reference to FIG. 6C, it is assumed that the user selects a piece of text (for example, a height of text content is greater than a set height) in an application notepad, for example, as shown in (a) in FIG. 6C. The user may touch and hold the piece of text in the notepad, so that the text enters a dragging state. Then, the user may drag, along an arrow direction shown in the figure, the text selected in the notepad to an editing interface of the email. For example, after the text is dragged to the editing interface of the email, a height of the text may be displayed on a visual interface of the user as 30% of an actual height of text content, as shown in (b) in FIG. 6C. In other words, after the text is dragged to the editing interface of the email, the height of the text content displayed on the editing interface of the email is 30% of the actual height of the text content.

According to the solution in this embodiment of this application, the dragging state of the file can be fed back in real time, so that the user can control a dragging process based on the dragging state, and can predict a dragging result, thereby improving operation friendliness of the user

Based on the foregoing embodiment, as shown in FIG. 7, an embodiment of this application further provides a file dragging method. Refer to FIG. 7. The method may include the following steps.

S701: Display a first window and a second window in response to a first operation of a user.

S702: Display a first interface in the first window in response to a second operation of selecting, by the user, an icon of a target file in the first window.

The first interface includes the icon of the target file.

S703: When it is detected that the icon of the target file is dragged from the first window to the second window, display first identification information or second identification information in the second window in response to a third operation of the user.

The third operation is used to drag the icon of the target file from the first window to the second window, the first identification information identifies that the icon of the target file can be added to the second window, and the second identification information identifies that the icon of the target file cannot be added to the second window.

For specific implementations of the foregoing steps, refer to the detailed descriptions in the foregoing embodiments. Details are not described herein again.

In the foregoing embodiments provided in this application, the method provided in embodiments of this application is described from a perspective of an electronic device serving as an execution body. To implement the functions in the method provided in the foregoing embodiments of this application, the electronic device may include a hardware structure and/or a software module, to implement the functions in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

FIG. 8 is a schematic diagram of a structure of an electronic device according to an embodiment of this application. The device may be an electronic device having a display. For example, the electronic device may be a mobile phone. As shown in FIG. 8, the electronic device 800 includes a display 801, one or more processors 802, a memory 803, a plurality of applications 804 (not shown in the figure), and one or more computer programs 805 (not shown in the figure). The foregoing components may be connected by using one or more communication buses 806.

The display 801 is configured to display a display interface of an application in the electronic device, and the like.

The memory 803 stores one or more computer programs, and the one or more computer programs include instructions. The processor 802 invokes the instructions stored in the memory 803, so that the electronic device 800 performs the following steps:
displaying a first window and a second window in response to a first operation of a user; displaying a first interface in the first window in response to a second operation of selecting, by the user, an icon of a target file in the first window, where the first interface includes the icon of the target file; and when it is detected that the icon of the target file is dragged from the first window to the second window, displaying first identification information or second identification information in the second window in response to a third operation of the user, where the third operation is used to drag the icon of the target file from the first window to the second window, the first identification information identifies that the icon of the target file can be added to the second window, and the second identification information identifies that the icon of the target file cannot be added to the second window.

In a possible implementation, when the instructions are invoked and executed by the one or more processors, the electronic device is enabled to further perform the following step: when it is detected that the icon of the target file is dragged from the first window to the second window, displaying third identification information in the second window, where the third identification information identifies a quantity of icons of the target file.

In a possible implementation, the target file includes a first file.

In a possible implementation, the target file includes a first file and a second file, a file type of the first file is a first type, and a file type of the second file is a second type.

When the instructions are invoked and executed by the one or more processors, the electronic device is enabled to further perform the following step: when it is detected that the icon of the target file is dragged from the first window to the second window, displaying fourth identification information in the second window, where the fourth identification information identifies that an icon of the second file of the second type cannot be added to the second window.

In a possible implementation, when the instructions are invoked and executed by the one or more processors, the electronic device is enabled to further perform the following step: displaying first prompt information, where the first prompt information is used to prompt the user that the icon of the target file is in a dragging state.

In a possible implementation, when the instructions are invoked and executed by the one or more processors, the electronic device is enabled to further perform the following step: if it is detected that a height of the icon of the target file is greater than a first set height, adjusting the height of the icon of the target file to a second set height, and displaying the icon of the target file in the second window, where the second set height is N times the first set height, and N satisfies 0<N<1.

In this embodiment of this application, the processor 802 may be a general-purpose processor, a digital signal processor, an application-specific integrated circuit, a field programmable gate array or another programmable logic device, a discrete gate or a transistor logic device, or a discrete hardware component, so that the methods, steps, and logical block diagrams that are disclosed in embodiments of this application may be implemented or performed. The general-purpose processor may be a microprocessor or any conventional processor or the like. The steps of the method disclosed with reference to embodiments of this application may be directly performed by a hardware processor, or may be performed by using a combination of hardware in the processor and a software module. The software module may be located in the memory 803. The processor 802 reads the program instructions from the memory 803, and completes the steps of the foregoing method in combination with the hardware of the processor

In this embodiment of this application, the memory 803 may be a non-volatile memory such as a hard disk drive (hard disk drive, HDD) or a solid-state drive (solid-state drive, SSD), or may be a volatile memory (volatile memory) such as a RAM. The memory may alternatively be any other medium that can be configured to carry or store expected program code in a form of an instruction structure or a data structure and that can be accessed by a computer. This is not limited thereto. The memory in this embodiment of this application may alternatively be a circuit or any other apparatus that can implement a storage function, and is configured to store instructions and/or data.

It may be clearly understood by a person skilled in the art that, for the purpose of convenient and brief description, for detailed working processes of the foregoing described apparatuses and units, refer to corresponding processes in the foregoing method embodiments. Details are not described herein again.

Based on the foregoing embodiments, an embodiment of this application further provides a chip. The chip is coupled to a memory in an electronic device, and performs the file dragging method provided in embodiments of this application. In embodiments of this application, "coupling" means that two components are directly or indirectly connected to each other.

Based on the foregoing embodiments, this application further provides a computer storage medium. The computer storage medium stores a computer program, and when the computer program is executed by a computer, the computer is enabled to perform the file dragging method provided in the foregoing embodiments.

An embodiment of this application further provides a computer program product, including instructions. When the instructions are run on a computer, the computer is enabled to perform the file dragging method provided in the foregoing embodiments.

Based on the foregoing embodiments, this application further provides a graphical user interface on an electronic device. The electronic device has a display, one or more memories, and one or more processors. The one or more processors are configured to execute one or more computer programs stored in the one or more memories. The graphical user interface includes a graphical user interface displayed when the electronic device performs the file dragging method provided in the foregoing embodiments.

Embodiments of this application are described with reference to the flowcharts and/or block diagrams of the method, the device (system), and the computer program product according to embodiments of this application. It should be understood that instructions may be used to implement each process and/or each block in the flowcharts and/or the block diagrams and a combination of a process and/or a block in the flowcharts and/or the block diagrams. These instructions may be provided for a general-purpose computer, a dedicated computer, an embedded processor, or a processor of another programmable data processing device to generate a machine, so that the instructions executed by the computer or the processor of the another programmable data processing device generate an apparatus for implementing a specific function in one or more processes in the flowcharts and/or in one or more blocks in the block diagrams.

These computer program instructions may alternatively be stored in a computer-readable memory that can instruct the computer or another programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more processes in the flowcharts and/or in one or more blocks in the block diagrams.

## Claims

1. A file dragging method, applied to an electronic device, wherein the method comprises:
displaying a first window and a second window in response to a first operation of a user;
displaying a first interface in the first window in response to a second operation of selecting, by the user, an icon of a target file in the first window, wherein the first interface comprises the icon of the target file; and
when it is detected that the icon of the target file is dragged from the first window to the second window, displaying first identification information or second identification information in the second window in response to a third operation of the user, wherein
the third operation is used to drag the icon of the target file from the first window to the second window, the first identification information identifies that the icon of the target file can be added to the second window, and the second identification information identifies that the icon of the target file cannot be added to the second window.

2. The method according to claim 1, wherein the method further comprises:
when it is detected that the icon of the target file is dragged from the first window to the second window, displaying third identification information in the second window, wherein the third identification information identifies a quantity of icons of the target file.

3. The method according to claim 1 or 2, wherein the target file comprises a first file.

4. The method according to claim 1 or 2, wherein the target file comprises a first file and a second file, a file type of the first file is a first type, and a file type of the second file is a second type; and
the method further comprises:
when it is detected that the icon of the target file is dragged from the first window to the second window, displaying fourth identification information in the second window, wherein the fourth identification information identifies that an icon of the second file of the second type cannot be added to the second window.

5. The method according to any one of claims 1 to 4, wherein the method further comprises:
displaying first prompt information, wherein the first prompt information is used to prompt the user that the icon of the target file is in a dragging state.

6. The method according to any one of claims 1 to 5, wherein the method further comprises:
if it is detected that a height of the icon of the target file is greater than a first set height, adjusting the height of the icon of the target file to a second set height, and displaying the icon of the target file in the second window, wherein the second set height is N times the first set height, and N satisfies 0<N<1.

7. An electronic device, wherein the electronic device comprises a display, one or more processors, a memory, a plurality of applications, and one or more computer programs, wherein
the one or more computer programs are stored in the memory, the one or more computer programs comprise instructions, and when the instructions are invoked and executed by the one or more processors, the electronic device is enabled to perform the following steps:
displaying a first window and a second window on the display in response to a first operation of a user;
displaying a first interface in the first window in response to a second operation of selecting, by the user, an icon of a target file in the first window, wherein the first interface comprises the icon of the target file; and
when it is detected that the icon of the target file is dragged from the first window to the second window, displaying first identification information or second identification information in the second window in response to a third operation of the user, wherein
the third operation is used to drag the icon of the target file from the first window to the second window, the first identification information identifies that the icon of the target file can be added to the second window, and the second identification information identifies that the icon of the target file cannot be added to the second window.

8. The electronic device according to claim 7, wherein when the instructions are invoked and executed by the one or more processors, the electronic device is enabled to further perform the following step:
when it is detected that the icon of the target file is dragged from the first window to the second window, displaying third identification information in the second window, wherein the third identification information identifies a quantity of icons of the target file.

9. The electronic device according to claim 7 or 8, wherein the target file comprises a first file.

10. The electronic device according to claim 7 or 8, wherein the target file comprises a first file and a second file, a file type of the first file is a first type, and a file type of the second file is a second type; and
when the instructions are invoked and executed by the one or more processors, the electronic device is enabled to further perform the following step:
when it is detected that the icon of the target file is dragged from the first window to the second window, displaying fourth identification information in the second window, wherein the fourth identification information identifies that an icon of the second file of the second type cannot be added to the second window.

11. The electronic device according to any one of claims 7 to 10, wherein when the instructions are invoked and executed by the one or more processors, the electronic device is enabled to further perform the following step:
displaying first prompt information, wherein the first prompt information is used to prompt the user that the icon of the target file is in a dragging state.

12. The electronic device according to any one of claims 7 to 11, wherein when the instructions are invoked and executed by the one or more processors, the electronic device is enabled to further perform the following step:
if it is detected that a height of the icon of the target file is greater than a first set height, adjusting the height of the icon of the target file to a second set height, and displaying the icon of the target file in the second window, wherein the second set height is N times the first set height, and N satisfies 0<N<1.

13. A computer storage medium, comprising computer instructions, wherein when the computer instructions are run on an electronic device, the electronic device is enabled to perform the file dragging method according to any one of claims 1 to 6.
